# EUROPEAN PATENT APPLICATION

(11) **EP 4 564 178 A1**
(43) Date of publication of application: **04.06.2025**
(21) Application number: 24215629.7
(22) Date of filing: 27.11.2024
(51) Int. Cl.: G06F 12/02

(54) **SYSTEMS, METHODS, AND APPARATUS FOR MEMORY ALLOCATION FOR A MEMORY DEVICE**

(30) Priority: 28.11.2023 US 202363603627 P; 23.08.2024 US 202418814457
(71) Applicant: Samsung Electronics Co., Ltd., Suwon-si, Gyeonggi-do 16677 (KR)
(72) Inventor: KACHARE, Ramdas, San Jose, CA 95134 (US); SOLTANIYEH, Mohammadreza, San Jose, CA 95134 (US); HUEN, Hingkwan, San Jose, CA 95134 (US); ZHAO, Dongwan, San Jose, CA 95134 (US); BEYGI, Amir, San Jose, CA 95134 (US); LAC, Tinh, San Jose, CA 95134 (US); AU, Edmund, San Jose, CA 95134 (US)
(74) Representative: Kuhnen & Wacker Patent- und Rechtsanwaltsbüro PartG mbB

(57) **Abstract**

In some aspects, a method may include receiving (310), at a memory interface of a device configured as memory, using a memory access protocol, a request to make a region of memory allocatable; and processing the request to make the region of memory allocatable. Processing (320) the request may include making allocatable at least a portion of storage media of the device corresponding to the region of memory and/or assigning a value to at least a portion of the storage media corresponding to the region of memory. The device may be configured to track allocated addresses on the device, and the method may further include modifying at least one circuit to make addresses allocatable corresponding to the region of memory. The method may further include modifying the device to indicate that the region of memory is free and adding the region of memory to a list of allocatable memory locations.

## Description

### TECHNICAL FIELD

This disclosure relates generally to memory devices, and more specifically to systems, methods, and apparatus for memory allocation for a memory device.

### BACKGROUND

Garbage collection is a background process commonly found in not-AND (NAND)-based memory devices used to reorganize valid data and reclaim space from invalidated data on blocks of the memory device for future writes. Garbage collection may involve internal data movement on a memory device, which may impact the performance of the device.

The above information disclosed in this Background section is only for enhancement of understanding of the background of the invention and therefore it may contain information that does not constitute prior art.

### SUMMARY

In some aspects, the techniques described herein relate to a method including receiving, at a memory interface of a device configured as memory, using a memory access protocol, a request to make a region of memory allocatable; and processing the request to make the region of memory allocatable. In some aspects, processing the request includes making allocatable at least a portion of storage media of the device corresponding to the region of memory. In some aspects, processing the request includes assigning a value to at least a portion of storage media of the device corresponding to the region of memory. In some aspects, the device includes at least one circuit configured to track allocated addresses on the device, and the method further includes modifying the at least one circuit to make addresses allocatable corresponding to the region of memory. In some aspects, the method further includes modifying the device to indicate that the region of memory is allocatable; and adding the region of memory to a list of allocatable memory locations. In some aspects, the device includes at least one circuit configured to perform one or more operations on the region of memory, and processing the request includes sending, based on receiving the request, a command to the at least one circuit to make the region of memory allocatable. In some aspects, the request to make a region of memory allocatable includes a memory range and an indication of an operation. In some aspects, the indication of an operation includes at least one of a trim operation, an initialize operation, a de-allocate operation, an initialize operation, a flush operation, a persist operation, a prefetch operation, an evict operation, an encrypt operation, a compress operation, and a de-duplication operation. In some aspects, the indication of an operation includes a command to perform at least one of assigning a value to at least a portion of storage media of the device corresponding to the memory range and making at least a portion of the storage media corresponding to the memory range allocatable. In some aspects, the method further includes sending a completion message including at least one of an indicator that a memory range is assigned and an indicator that the memory range is allocatable.

In some aspects, the techniques described herein relate to a device including at least one circuit; memory media; and storage media; wherein the at least one circuit is configured to perform one or more operations including receiving, using a memory access protocol, a request to make a region of memory allocatable; and making the region of memory allocatable. In some aspects, the at least one circuit is configured to track addresses of allocated regions of memory on the device; and the at least one circuit is further configured to perform one or more operations including modifying the at least one circuit to make available at least one address corresponding to the region of memory. In some aspects, the device includes a storage device, the storage device includes the storage media, and the at least one circuit is further configured to perform one or more operations including sending, to the storage media, a command to make the region of memory allocatable; wherein the storage media is configured to make the region of memory allocatable based on the command. In some aspects, the storage media is further configured to perform one or more operations including receiving, from the at least one circuit, a command to make allocatable the region of memory on the storage media; and making allocatable the region of memory on the storage media. In some aspects, the memory media is configured to perform one or more operations including making allocatable the region of memory on the memory media. In some aspects, the at least one circuit is further configured to perform one or more operations including sending an indication that the region of memory is allocatable on the device.

In some aspects, the techniques described herein relate to a system including a host device; and a memory device including at least one circuit, memory media, and storage media; wherein the storage media includes persistent storage; and wherein the at least one circuit is configured to perform one or more operations including: receiving, from the host device, using a memory access protocol, a request to make a portion of the storage media allocatable; translating the portion of the storage media to one or more addresses; and modifying the at least one circuit to make the one or more addresses available. In some aspects, the at least one circuit includes a flash translation layer, and wherein the at least one circuit is further configured to perform one or more operations including modifying the flash translation layer to make available addresses corresponding to the one or more addresses. In some aspects, the at least one circuit is further configured to perform one or more operations including sending a request to the storage media to make allocatable one or more regions of the storage media corresponding to the one or more addresses; wherein the storage media is configured to perform one or more operations including making allocatable the one or more regions of the storage media. In some aspects, the system further includes memory media; and the at least one circuit is further configured to perform one or more operations including making one or more regions of the memory media allocatable corresponding to the one or more addresses.

### BRIEF DESCRIPTION OF THE DRAWINGS

The figures are not necessarily drawn to scale and elements of similar structures or functions may generally be represented by like reference numerals or portions thereof for illustrative purposes throughout the figures. The figures are only intended to facilitate the description of the various embodiments described herein. The figures do not describe every aspect of the teachings disclosed herein and do not limit the scope of the claims. To prevent the drawings from becoming obscured, not all of the components, connections, and the like may be shown, and not all of the components may have reference numbers. However, patterns of component configurations may be readily apparent from the drawings. The accompanying drawings, together with the specification, illustrate example embodiments of the present disclosure, and, together with the description, serve to explain the principles of the present disclosure.
FIG. 1 illustrates an embodiment of a memory device scheme in accordance with example embodiments of the disclosure.
FIG. 2a illustrates additional embodiments of a memory device scheme in accordance with embodiments of the disclosure.
FIG. 2b illustrates additional embodiments of a memory device scheme in accordance with embodiments of the disclosure.
FIG. 3 illustrates a flowchart of a method of making memory allocatable in accordance with embodiments of the disclosure.
FIG. 4 illustrates an example embodiment of a command and status register in accordance with embodiments of the disclosure.
FIG. 5 illustrates an example embodiment of a region of memory in accordance with embodiments of the disclosure.
FIG. 6 illustrates an example operating environment in accordance with embodiments of the disclosure.
FIG. 7 illustrates another example operating environment in accordance with embodiments of the disclosure.
FIG. 8 illustrates a flowchart of a memory deallocation process in accordance with embodiments of the disclosure.

### DETAILED DESCRIPTION

A memory device may make a region of memory allocatable (e.g., deallocate and/or initialize the region of memory) before writing data to the region of memory. In some embodiments, the memory device may also use a background garbage collection process to perform one or more operations to make the region of memory allocatable. Thus, in some embodiments, garbage collection may increase the efficiency of a memory device by making regions of memory allocatable in the background so that, when the memory device writes data, the host may not wait for a region of memory to be allocatable for the write operation.

Generally, the host may not control when garbage collection is performed. In other words, the memory device may determine when garbage collection is performed. For example, the memory device may wait until the memory device is not being used to run a garbage collection operation. However, since attempts to perform a garbage collection operation may conflict with other operations, the performance (e.g., latency) of the memory device may be improved if the host can also control when some garbage collection operations are being run. Thus, in some embodiments, providing a means for the host to control some garbage collection-related operations may improve the overall performance of a memory device.

According to embodiments of the invention, using a memory access protocol, the host may communicate with the memory device to actively perform some garbage collection-related operations (e.g., operations to make memory allocatable). In some embodiments, a memory device may receive a request to make a region of memory allocatable using the memory access protocol. In some embodiments, the memory device may perform one or more operations to make the region of memory allocatable, e.g., so that the region may be freed/available for future write operations.

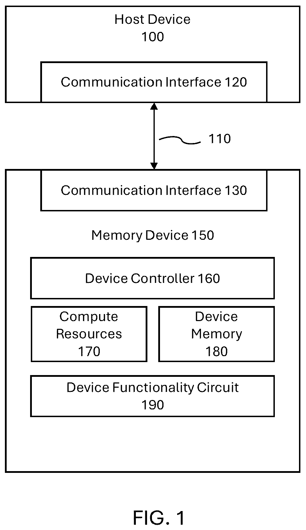

Fig. 1 illustrates an embodiment of a memory device scheme in accordance with example embodiments of the disclosure. The embodiment illustrated in Fig. 1 may include one or more host devices **100** and one or more memory devices **150** configured to communicate using one or more communication connections **110.**

In some embodiments, a host device **100** may be implemented with any component or combination of components that may utilize one or more features of a memory device **150.** For example, a host may be implemented with one or more of a server, a storage node, a compute node, a central processing unit (CPU), a workstation, a personal computer, a tablet computer, a smartphone, and/or the like, or multiples and/or combinations thereof.

In some embodiments, a memory device **150** may include a communication interface 130, memory **180** (some or all of which may be referred to as device memory), one or more compute resources **170** (which may also be referred to as computational resources), a device controller **160,** and/or a device functionality circuit **190.** In some embodiments, the device controller **160** may control the overall operation of the memory device **150** including any of the operations, features, and/or the like, described herein. For example, in some embodiments, the device controller **160** may parse, process, invoke, and/or the like, commands received from the host devices **100.**

In some embodiments, the device functionality circuit **190** may include any hardware to implement the primary function of the memory device **150.** For example, the device functionality circuit **190** may include storage media such as magnetic media (e.g., if the memory device **150** is implemented as a hard disk drive (HDD) or a tape drive), solid state media (e.g., one or more flash memory devices), optical media, and/or the like. For instance, in some embodiments, a memory device may be implemented at least partially as a solid-state drive (SSD) based on NAND flash memory, persistent memory (PMEM) such as cross-gridded nonvolatile memory, memory with bulk resistance change, phase change memory (PCM), or any combination thereof. In some embodiments, the device controller **160** may include a media translation layer such as a flash translation layer (FTL) for interfacing with one or more flash memory devices. In some embodiments, the memory device **150** may be implemented as a computational storage drive, a computational storage processor (CSP), and/or a computational storage array (CSA).

As another example, if the memory device **150** is implemented as an accelerator, the device functionality circuit **190** may include one or more accelerator circuits, memory circuits, and/or the like.

The compute resources **170** may be implemented with any component or combination of components that may perform operations on data that may be received, stored, and/or generated at the memory device **150.** Examples of compute engines may include combinational logic, sequential logic, timers, counters, registers, state machines, complex programmable logic devices (CPLDs), field programmable gate arrays (FPGAs), application specific integrated circuits (ASICs), embedded processors, microcontrollers, central processing units (CPUs) such as complex instruction set computer (CISC) processors (e.g., x86 processors) and/or a reduced instruction set computer (RISC) processors such as ARM processors, graphics processing units (GPUs), data processing units (DPUs), neural processing units (NPUs), tensor processing units (TPUs), and/or the like, that may execute instructions stored in any type of memory and/or implement any type of execution environment such as a container, a virtual machine, an operating system such as Linux, an Extended Berkeley Packet Filter (eBPF) environment, and/or the like, or a combination thereof.

In some embodiments, the memory **180** may be used, for example, by one or more of the compute resources **170** to store input data, output data (e.g., computation results), intermediate data, transitional data, and/or the like. The memory **180** may be implemented, for example, with volatile memory such as dynamic random access memory (DRAM), static random-access memory (SRAM), and/or the like, as well as any other type of memory such as nonvolatile memory.

In some embodiments, the memory **180** and/or compute resources **170** may include software, instructions, programs, code, and/or the like, that may be performed, executed, and/or the like, using one or more compute resources (e.g., hardware (HW) resources). Examples may include software implemented in any language such as assembly language, C, C++, and/or the like, binary code, FPGA code, one or more operating systems, kernels, environments such as eBPF, and/or the like. Software, instructions, programs, code, and/or the like, may be stored, for example, in a repository in memory **180** and/or compute resources **170.** In some embodiments, software, instructions, programs, code, and/or the like, may be downloaded, uploaded, sideloaded, pre-installed, built-in, and/or the like, to the memory **180** and/or compute resources **170.** In some embodiments, the memory device **150** may receive one or more instructions, commands, and/or the like, to select, enable, activate, execute, and/or the like, software, instructions, programs, code, and/or the like. Examples of computational operations, functions, and/or the like, that may be implemented by the memory **180,** compute resources **170,** software, instructions, programs, code, and/or the like, may include any type of algorithm, data movement, data management, data selection, filtering, encryption and/or decryption, compression and/or decompression, checksum calculation, hash value calculation, cyclic redundancy check (CRC), weight calculations, activation function calculations, training, inference, classification, regression, and/or the like, for artificial intelligence (AI), machine learning (ML), neural networks, and/or the like.

In some embodiments, a communication interface **120** at a host device **100,** a communication interface **130** at a memory device **150,** and/or a communication connection **110** may implement, and/or be implemented with, one or more interconnects, one or more networks, a network of networks (e.g., the internet), and/or the like, or a combination thereof, using any type of interface, protocol, and/or the like. For example, the communication connection **110,** and/or one or more of the interfaces **120** and/or **130** may implement, and/or be implemented with, any type of wired and/or wireless communication medium, interface, network, interconnect, protocol, and/or the like including Peripheral Component Interconnect Express (PCIe), NVMe, NVMe over Fabric (NVMe-oF), Compute Express Link (CXL), and/or a coherent protocol such as CXL.mem, CXL.cache, CXL.io and/or the like, Gen-Z, Open Coherent Accelerator Processor Interface (OpenCAPI), Cache Coherent Interconnect for Accelerators (CCIX), and/or the like, Advanced eXtensible Interface (AXI), Direct Memory Access (DMA), Remote DMA (RDMA), RDMA over Converged Ethernet (ROCE), Advanced Message Queuing Protocol (AMQP), Ethernet, Transmission Control Protocol/Internet Protocol (TCP/IP), FibreChannel, InfiniBand, Serial ATA (SATA), Small Computer Systems Interface (SCSI), Serial Attached SCSI (SAS), iWARP, any generation of wireless network including 2G, 3G, 4G, 5G, 6G, and/or the like, any generation of Wi-Fi, Bluetooth, near-field communication (NFC), and/or the like, or any combination thereof. In some embodiments, a communication connection **110** may include one or more switches, hubs, nodes, routers, and/or the like.

In some embodiments, a memory device **150** may be implemented in any physical form factor. Examples of form factors may include a 3.5 inch, 2.5 inch, 1.8 inch, and/or the like, storage device (e.g., storage drive) form factor, M.2 device form factor, Enterprise and Data Center Standard Form Factor (EDSFF) (which may include, for example, E1.S, E1.L, E3.S, E3.L, E3.S 2T, E3.L 2T, and/or the like), add-in card (AIC) (e.g., a PCIe card (e.g., PCIe expansion card) form factor including half-height (HH), half-length (HL), half-height, half-length (HHHL), and/or the like), Next-generation Small Form Factor (NGSFF), NF1 form factor, compact flash (CF) form factor, secure digital (SD) card form factor, Personal Computer Memory Card International Association (PCMCIA) device form factor, and/or the like, or a combination thereof. Any of the computational devices disclosed herein may be connected to a system using one or more connectors such as SATA connectors, SCSI connectors, SAS connectors, M.2 connectors, EDSFF connectors (e.g., 1C, 2C, 4C, 4C+, and/or the like), U.2 connectors (which may also be referred to as SSD form factor (SSF) SFF-8639 connectors), U.3 connectors, PCIe connectors (e.g., card edge connectors), and/or the like.

Any of the memory devices disclosed herein may be used in connection with one or more personal computers, smart phones, tablet computers, servers, server chassis, server racks, datarooms, datacenters, edge datacenters, mobile edge datacenters, and/or any combinations thereof.

In some embodiments, a memory device **150** may be implemented with any device that may include, or have access to, memory, storage media, and/or the like, to store data that may be processed by one or more compute resources **170.** Examples may include memory expansion and/or buffer devices such as CXL type 2 and/or CXL type 3 devices, as well as CXL type 1 devices that may include memory, storage media, and/or the like.

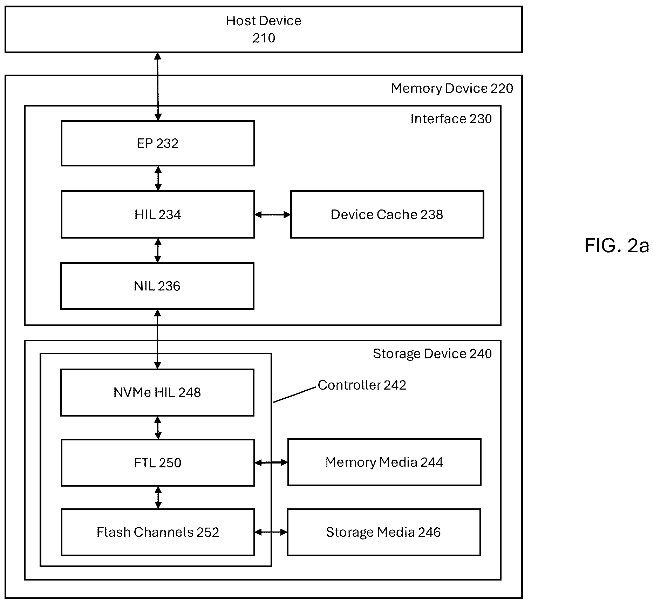

FIG. 2a illustrates another example embodiment of a memory device scheme in accordance with embodiments of the disclosure. FIG. 2a illustrates a host device **210** and a memory device **220.** The host device **210** and memory device **220** may be similar to the host device **100** and memory device **150** in FIG. 1. In some embodiments, the memory device **220** may include an interface **230** that may include a device-side cache (e.g., device cache **238**), and a storage device **240** that may be used as additional memory to the device cache **238.** In some embodiments, the interface **230** may be implemented on an ASIC, FPGA, or system-on-chip (SOC). In some embodiments, the storage device **240** may be implemented on an SSD. In some embodiments, the interface **230** may include an end point (EP) **232,** host interface (I/F) logic (HIL) **234,** and storage device I/F logic (NIL) **236.** In some embodiments, the NIL **236** may be NVMe host I/F logic and may communicate with the storage device **240** using an NVMe protocol. In some embodiments, the EP **232,** HIL **234,** and NIL **236** may be implemented on one or more circuits of the interface **230.** In some embodiments, the device cache **238** may be implemented as DRAM or static random-access memory (SRAM). In some embodiments, the storage device **240** may include a controller **242,** memory media **244,** and storage media **246.** In some embodiments, the controller **242** may include a HIL **248,** flash translation layer (FTL) **250,** and flash channels **252.** In some embodiments, the HIL **24,** FTL **250,** and flash channels **252** may be implemented on one or more circuits of the storage device **240.** In some embodiments, the memory media **244** may be implemented on DRAM, and the storage media **246** may be implemented on NAND flash memory. In some embodiments, the memory media **244** and storage media **246** may be implemented on other types of media. For example, the memory media **244** may be implemented on memory characterized as relatively fast memory, and the storage media **246** may be implemented on memory characterized as having a relatively large capacity.

In some embodiments, the host device **210** may communicate with the memory device 220 (e.g., send commands to the memory device **220**) using memory access protocols. For example, the memory device **220** may be a CXL-compatible device using CXL.mem, CXL.IO, and CXL.cache protocols to communicate with the host device **210.**

In some embodiments, the EP **232** may receive commands from the host device **210** and send commands to the HIL **234.** In some embodiments, the interface **230** may receive host physical addresses (HPAs) from the host device **210** and convert the HPAs to device physical addresses (DPAs) to be used by the HII, **234.** In some embodiments, when communicating back to the host device **210,** the DPAs may be converted to HPAs for use by the host device **210.**

In some embodiments, when the HII, **234** receives a command (e.g., a read request), the HII, **234** may check if the data requested by the host device **210** is found in the device cache **238** and return the data from the device cache **238.** In some embodiments, if the data is not found in the device cache **238,** the HIL **234** may send a request to the NIL **236** to retrieve the data from the storage device **240.**

In some embodiments, when the host device **210** writes data to the memory device **220** (e.g., a write request), the HIL **234** may write the data to the device cache **238** if there is space available for the write operation. In some embodiments, if there is not enough free space, the HIL **234** may send a request to the NIL **236** to move some of the data pages in the device cache **238** to the storage device **240** to make room for new data in the device cache **238.** In some embodiments, the NIL **236** may use, e.g., an NVMe protocol to fetch (e.g., NVMe read) and flush or evict (e.g., NVMe write) to/from the storage device **240.**

In some embodiments, the NIL **236** and HIL **248** may communicate using a protocol such as an NVMe protocol. For example, in some embodiments, the NIL **236** may send a request (e.g., an NVMe read request) to the HIL **248.** In some embodiments, the host device **210** and memory device **220** may communicate using a method other than communication between the NIL **236** and HIL **248.** Furthermore, the communication between the NIL 236 and HIL **248** may use any protocol that allows for communication between the host device **210** and memory device **220.** It is within the scope of the disclosure for the host device **210** and memory device **220** to communicate using any protocol and any interface that allows communication between a host device and memory device. For example, one or more memory devices may be connected using any type of interface and/or protocol including Peripheral Component Interconnect Express (PCIe), Nonvolatile Memory Express (NVMe), NVMe-over-fabric (NVMe oF), Advanced eXtensible Interface (AXI), Ultra Path Interconnect (UPI), Ethernet, Transmission Control Protocol/Internet Protocol (TCP/IP), remote direct memory access (RDMA), RDMA over Converged Ethernet (ROCE), FibreChannel, InfiniBand, Serial ATA (SATA), Small Computer Systems Interface (SCSI), Serial Attached SCSI (SAS), iWARP, and/or the like, or any combination thereof.

In some embodiments, the controller **242** may manage reads/writes to the memory media **244** and storage media **246.** For example, in some embodiments, the controller **242** may be used to determine where data resides on the storage media **246.** In some embodiments, the FTL **250** may receive addresses from the memory device **220** and translate the addresses to physical addresses on the memory media **244** and storage media **246.** In other words, in some embodiments, the FTL **250** may contain logical to physical address translations and keep track of valid written data on the storage device **240.** In some embodiments, the controller **242** may use the flash channels **252** to communicate with the storage media **246.**

In some embodiments, in addition to data reads/writes to the memory media **244** and storage media **246,** the controller **242** may perform various functions, such as garbage collection on the storage device **240.** In some embodiments, garbage collection may be carried out in the background (e.g., using a background process or thread). In some embodiments, the background process may collide with data read/write operations (e.g., garbage collection operations and read/write operations may be attempted to be performed at the same time) resulting in higher latency to the host device **210** (e.g., the host may wait for the garbage collection operations to be performed before performing the read/write operations). Some examples of garbage collection operations include wear leveling, recycling, recovery, and retention.

In some embodiments, the memory device **220** may be a tiered memory expansion device allowing for additional RAM and flash memory that may be accessed by the host device **210** to be used as memory. In some embodiments, the memory device **220** may be used as an alternative to DRAM on the host device **210** to expand memory capacity since memory devices may be more affordable than DRAM, helping reduce the overall total cost of ownership. In other words, the memory device **220** may be used as expanded memory by the host device **210.** In some embodiments, while memory devices may offer a lower-cost solution for memory expansion, memory devices may have higher and more unpredictable latency results as compared to DRAM on the host device. In some embodiments, this may lead to performance fluctuations and affect the execution of system tasks on the host device **210.** In some embodiments, a contributor to the latency of a memory device may be the garbage collection process. For example, because garbage collection involves internal data movement, when it is active (e.g., garbage collection is in the process of being performed), it may impact the performance of the memory device as seen by a host (e.g., the host may wait for the garbage collection operations before executing operations on the memory device).

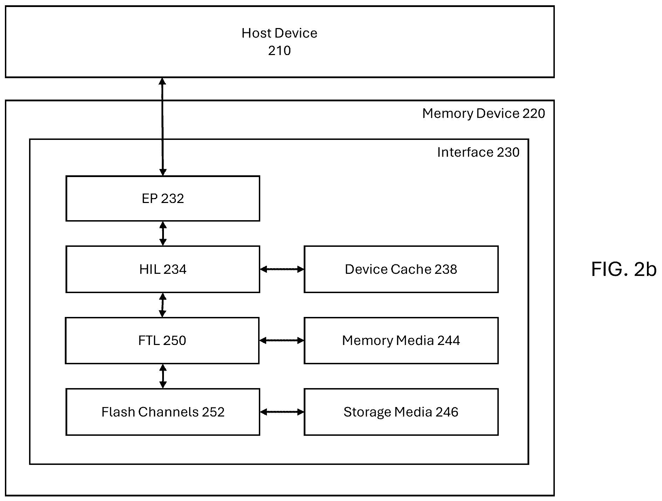

FIG. 2b illustrates another example embodiment of a memory device scheme in accordance with embodiments of the disclosure. The elements illustrated in FIG. 2b may be similar elements to those illustrated in FIG. 2a in which similar elements may be indicated by reference numbers ending in, and/or containing, the same digits, letters, and/or the like. Differences between FIG. 2a and FIG. 2b include that, as shown in FIG. 2b, the memory device **220** may use the storage media **246** (e.g., NAND flash memory) directly instead of connecting to the storage device **240,** as shown in FIG. 2a. In some embodiments, the memory device **220** of FIG. 2b may be referred to as an integrated tiered memory expander device. Any of the disclosed embodiments can be applied to the memory device **220** in FIG. 2a (e.g., tiered memory expander device) or the memory device **220** in FIG. 2b (e.g., integrated tiered memory expander device). In some embodiments, for the memory device **220** in FIG. 2b, the NII, **236** shown in FIG. 2a may not be required, and optimizations (e.g., NAND media management optimizations) may be performed on the storage media **246.**

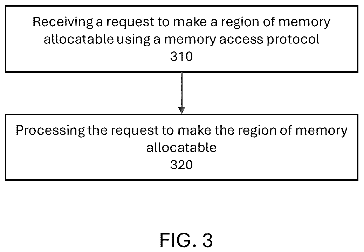

FIG. 3 illustrates a flowchart of a method of making memory allocatable in accordance with embodiments of the disclosure. The following description may be applied to the memory device 220 in FIGs. 2a and 2b. Where there are differences, the descriptions will identify which figure the description applies to.

At **310,** a request may be received at a memory interface of a device configured as memory to make a region of memory allocatable using a memory access protocol. In some embodiments, a set of commands for communication between the memory device and a host may be defined for the memory access protocol. For example, the memory device may provide one or more commands that a host may use to communicate with a control and status register (CSR) on the memory device. In some embodiments, the CSR may include an indication of a memory region, e.g., a memory address range, and an opcode, e.g., the operation that the host may request to be performed on the memory device. In some embodiments, the operation may include an operation to deallocate memory, initialize memory, flush memory, persist memory, prefetch memory, evict memory, encrypt memory, compress memory, and de-duplicate memory among others.

In some embodiments, a host may send a request to the memory device to make the address region(s) allocatable. In other words, in some embodiments, the host may identify when data is no longer being used by the host and request that the memory device deallocate the memory (e.g., using a deallocate memory opcode). For example, when the data is no longer being used by the host, reference to the data may be removed on the host. However, the data may remain on the memory device until the host communicates to the memory device that the region of memory containing the data may be made allocatable. In some embodiments, the data may continue to persist on the storage media of the memory device. Thus, in some embodiments, the host may update one or more circuits (e.g., the CSR) on the memory device to indicate a region of memory may be made allocatable. In some embodiments, the host may not use a CSR, and may, e.g., send a different request to make a region of memory allocatable. For example, the memory access protocol may provide one or more commands to make a region of memory allocatable.

As described above, a memory device may deallocate a region of memory to make the memory allocatable. It should be understood that making memory allocatable may include other operations. For example, in some embodiments, the addresses for the region of memory may be included in a free memory pool to allocate memory for future memory requests. In some embodiments, the pointers to the region of memory may be removed. Furthermore, in some embodiments, the memory device may write zeros to the memory locations in the region of memory.

At **320,** the memory device may process the request to make the region of memory allocatable. For example, the memory device may send an NVMe data set management (NVMe DSM) deallocate command, to the storage media, such as the storage media **246** in FIG. 2a, to make allocatable the associated logical block addressing (LBA) regions with a deallocated memory range. In some embodiments, the memory device may use an interface, such as the interface **230** in FIG. 2b to communicate the request to make the region of memory allocatable to the storage media.

Generally, a memory device may wait until it receives a write request (e.g., an LBA write request) to make a region of memory allocatable (e.g., deallocate). For example, the memory device may receive a write request, and check to see if the region of memory is allocatable. If the region of memory is allocatable, the storage device may write to that region of memory. If data exists in that region of memory, the storage device may move valid data to another region of memory, and make the region of memory allocatable for the write request. In some embodiments, if moving valid data to another region of memory and making the region allocatable is performed separately from the write operation, the host may not wait for the memory to be made allocatable when a write operation is being performed on the memory device.

In some embodiments, a memory device may be divided into blocks, and the blocks may be divided into pages. Data may be read and written at a page level (e.g., the size of a read or write may be a page) but may be erased at a block level (e.g., the size of an erase may be a block). In some embodiments, when data is written to a memory device, the data may be written to an empty page. However, in some embodiments, the block in which the page is located may contain data (e.g., valid and/or invalid data). In some embodiments, if the block contains valid data (e.g., data still in use), the data may be moved to another block before the block is made allocatable. In other words, in some embodiments, prior to a write operation on a first block, valid data may be moved from the first block to a second block and the first block may be erased before writing data corresponding to the write operation to the first block. Thus, in some embodiments, the block may be made allocatable before the data is written.

In some embodiments, an FTL may be updated to free the LBAs corresponding to the allocatable memory address range (e.g., region of memory). In some embodiments, a request from the host (e.g., deallocate command) may be used to mark unused pages instead of at a next write request (e.g., LBA write request). In some embodiments, this may prevent the garbage collection process from copying unused pages (e.g., if data in the region of memory has not been deallocated and the memory device moves the data from the region of memory prior to the write request), thus, lowering the garbage collection load and reducing the garbage collection time, helping to improve the overall latency.

In some embodiments, data initialization (e.g., zeroing out the pages) may be offloaded to the device. In some embodiments, for data initialization, the region of memory may be assigned a value, such as zero. In some embodiments, instead of a memory manager on the host initializing data on the device, the memory device may perform its own initialization (e.g., use CSR to perform initialization). In some embodiments, operations such as encryption/decryption, compression, de-duplication, pattern search, regular expression, etc. to the specified address range may also be offloaded to the device. In some embodiments, data privacy/security protection with lower overhead may be provided by actively removing the unused blocks from the memory device. In other words, data may be actively removed from the memory device, so that the data does not remain on the physical media of the device.

In some embodiments, upon determining that memory may be made allocatable by an operating system (OS), system software, or application, the OS may use a system call to make allocatable the specified address range. For example, the OS may issue a request to remove mappings for pages containing at least a portion of the address range (e.g., munmap()) to make pages of memory allocatable. In some embodiments, the request may initiate a new process to perform invalidating the associated address ranges in the memory device in the background. In some embodiments, the OS may add the address range to a free memory pool for future allocation request. It should be understood that any operation and/or combination of operations to make an address range allocatable may be used. In some embodiments, multiple processes may be used to support multiple deallocation tasks at the same time. In some embodiments, using multiple processes may be orthogonal to using a request to remove mappings for pages containing at least a portion of the address range to generate a new process for deallocating different address ranges. For example, in some embodiments, using a munmap() command, the munmap() may remove mappings for pages containing any part of the address space of the process starting at a first address and extending for the length of the address range. In some embodiments, a munmap() call may not be used, and another system call to make a range of addresses allocatable may be used. It is within the scope of the disclosure to use any system call to deallocate a portion of memory.

In some embodiments, one or more commands may be sent to the memory device to discard or invalidate the specified memory regions. In some embodiments, when the memory device receives the commands, the memory device may form SSD commands, such as a DSM Deallocate command using the NVMe protocol, to complete the invalidation task and respond to the OS once it is complete.

In some embodiments, before pages are added back to the free list (e.g., list of allocatable pages), the memory device may be informed. In some embodiments, the device may update the FTL, marking LBAs as free.

In some embodiments, a command such as an NVMe DataSet Management Trim command may be sent to the storage media, or the FTL may be directly updated, to make regions of memory allocatable (e.g., deallocate the memory range). In some embodiments, a communication indicating that the memory is allocatable may be sent to the host. For example, the communication may be performed by CSR polling, an interrupt, or a message response.

In some embodiments, in the case of an integrated tiered memory expander device that has NAND memory directly interfacing with a HIL, an equivalent NAND management function may unmap the LBA ranges corresponding to the deallocated memory regions.

In some embodiments, the CSR may be polled by the host to communicate a deallocation completion. In some embodiments, an interrupt may be used to communicate a deallocation completion, e.g., legacy interrupt (e.g., INTx), message signaled interrupt (e.g., MSI, MSI-X), etc. In some embodiments, upon receiving the response from the device, the OS may finish the unmapping task and add the free pages to the linked list of blocks of pages that are free and ready for new allocations.

In some embodiments, if the memory device is an integrated tiered memory expander device, as shown in FIG. 2b, the NVMe DSM deallocate command may not be sent to the storage media, and may be handled by the integrated tiered memory expander device. In some embodiments, the region of memory may be made allocatable while the data in the blocks remains until a garbage collection operation is performed.

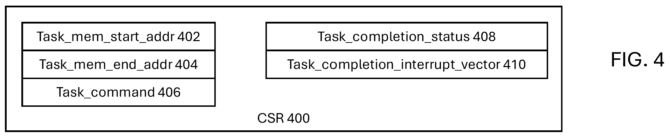

FIG. 4 illustrates an example embodiment of a control and status register in accordance with embodiments of the disclosure. In some embodiments, CSR commands for communication between the host and the tiered memory device may be provided. In some embodiments, a device may provide CSRs for address range de-allocation tasks and completions. In some embodiments, a CSR **400** may include a start memory address range (e.g., task_mem_start_addr **402**)**,** end memory address range (e.g., task_mem_end_addr **404**)**,** task completion status **408,** task completion interrupt vector **410** and a task command operation code (e.g., task_command **406**)**.** In some embodiments, examples of a task_command **406** operation code may include de-allocate, initialize, flush, persist, prefetch, evict, encrypt, compress, and de-duplicate memory, among others. In some embodiments, a CSR may not include all of the aforementioned fields and may include only some of the fields and may additionally include other fields. For example, a CSR may not include a task completion status **408,** and may communicate a completion status using, e.g., an interrupt. In some embodiments, the task_command **406** may include codes to trim and/or assign the region of memory to zero. For example, codes to set trim command only, set initialize zero command only, and set both trim and initialize zero commands may be provided. In some embodiments, codes for the task completion status **408** and/or task completion interrupt vector **410** may be provided. For example, codes to indicate that a TRIM operation has been completed or that the memory has been initialized to zero may be provided.

In some embodiments, the task_mem_strt_addr **402** and task_mem_end_addr **404** may be 64-bit in length. In some embodiments, the task_command **406** may be an 8-bit value.

In some embodiments, multiple sets of CSRs to facilitate multiple outstanding memory address range de-allocations may be used. In some embodiments, a circular command submission/completion queue-based mechanism with appropriate flow control features may be used for communication between the host device and memory device. In some embodiments, CSRs may be exposed to the host as an input/output (I/O) mapped set of registers utilizing an I/O block protocol and/or PCIe/cache-coherent memory configuration space. In some embodiments, the request may be an out-of-band message.

In some embodiments, CSRs may be exposed to the host system software using a memory mapped set of addresses. For example, the exposed CSRs may be part of one or more memory addresses ranges advertised by the memory device. In some embodiments, the memory address location of the CSRs may be fixed or programmable by the system software.

In some embodiments, when a memory device receives a request to deallocate memory from a host, the device may issue one or more trim commands (e.g., DSM Deallocate commands in the case of NVMe) to the memory media (e.g., backend SSD). In some embodiments, the device may scan the device side cache for any pages falling in the deallocated address range. In some embodiments, device cache pages that fall in the deallocated range, may be marked as free/invalid.

In some embodiments, the NVMe DSM Deallocate commands may mark NAND pages associated with the LBA as invalid. In some embodiments, the FTL may consolidate valid data into fewer blocks and erase the blocks with invalid data. In some embodiments, the FTL may be able to keep track of which physical blocks no longer need to be recycled. In some embodiments, by reducing unnecessary data movement of invalid blocks caused by garbage collection and wear leveling, write amplification may be reduced, endurance of flash memory may be improved, and overall performance may be improved.

In some embodiments, for an integrated tiered memory expander device, FTL tables may be updated directly without using NVMe commands.

In some embodiments, to protect data privacy and security, memory pages may be initialized (e.g., zeroed out) before they are allocated by a new process. In some embodiments, the same policy may apply to an SSD-backed tiered memory device.

In some embodiments, the memory device may receive memory requests from an OS on the host to zero an allocated region before being accessed by a new process. In some embodiments, if memory requests are 64 bytes in size, to free up one page 4K in size, the OS may require 64 memory requests to completely zero an entire page. In some embodiments, memory ranges on the memory device may be initialized, resulting in improvements to the overall initialization performance. In some embodiments, the OS may send a command using a CSR to initialize the memory regions on the memory device. In some embodiments, upon receiving the command, a controller on the memory device may issue zero commands to initialize LBAs associated with the memory address range. In some embodiments, the memory device may invalidate the corresponding data blocks in the device cache to make room for future data. In some embodiments, the initialization step may be offloaded to the memory device and be performed with higher performance and with minimal communication between the host and the memory device, thus, reducing the burden to the processor of a host. In some embodiments, to minimize the communication between the host and the memory device, the deallocation (e.g., making memory allocatable) and initialization mechanisms may be combined and performed with a single command. In other words, the memory regions on the memory device may be initialized to zero when they are deallocated. Thus, data privacy protection may be ensured (e.g., since the data is removed when the region of memory is initialized), and no further initialization step may be needed when the page is allocated by another process.

In some embodiments, the host-device communication method may also be used to perform a large number of operations on the specified address range. Some examples of operations include encryption of the data, compression of the data, de-duplication, pattern search, prefetch and eviction into the device cache, flush and persist to the NAND media, etc.

In some embodiments, the initialization and deallocation may be managed by a host system software such as a hypervisor or other application.

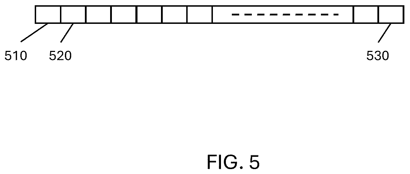

FIG. 5 illustrates a region of memory in accordance with embodiments of the disclosure. FIG. 5 illustrates region 0 **510,** region 1 **520,** and region n **530.** However, region 0 **510,** region 1 **520,** and region n **530** are shown for illustrative purposes, and there may be many more regions (e.g., n+1 number of regions). In some embodiments, the memory on the memory device may be organized into regions. For example, in some embodiments, a region may be 100 MB in size. In other embodiments, a region may be any size. For example, a region may be the size of a page, a block, a portion of a block, or multiple blocks. In some embodiments, a region may be any size that the host can use to issue a command. For example, in some embodiments, a region may be the smallest size of a region for the memory device to deallocate memory.

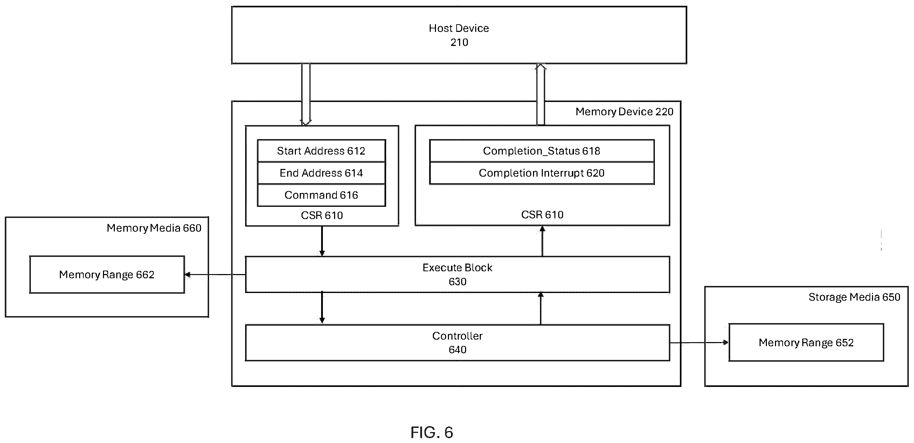

FIG. 6 illustrates an operating environment in accordance with embodiments of the disclosure. The elements illustrated in FIG. 6 may be similar elements to those illustrated in FIG. 2a and 2b in which similar elements may be indicated by reference numbers ending in, and/or containing, the same digits, letters, and/or the like. In some embodiments, the memory device **220** may include at least one CSR **610,** an execute block **630,** controller **640,** storage media **650,** and memory media **660.** In some embodiments, the storage media **650** may include a memory range **652,** and the memory media **660** may include a memory range **662.** Although FIG. 6 shows multiple CSRs for illustrative purposes, the at least one CSR **610** may be the same CSR. In some embodiments, the CSR 610 may include a start address **612,** end address **614,** command **616,** completion status **618,** and completion interrupt **620.** In some embodiments, the start address **612,** end address **614,** command **616,** completion status **618,** and completion interrupt **620.** may be similar to the task_mem_start_addr **402,** task_mem_end_addr **404,** task_command **406,** task_completion status **408,** and task completion interrupt vector **410** in FIG. 4.

In some embodiments, the host device **210** may send a command to the memory device **220.** In some embodiments, the command may be a request to make a region of memory allocatable or zero a region of memory. In some embodiments, based on the request, the memory device **220** may send a command (e.g., trim or init zero command) to the execute block. For example, a trim command may indicate which blocks are no longer in use and may be erased. In some embodiments, an init zero command may zero the region of memory (e.g., remove the data located on the physical media of the device). In some embodiments, data structures on the FTL of the memory device may be updated (e.g., regions of memory may be indicated as free). In some embodiments, if the region of memory (e.g., memory range **662**) that the command is performed on is on the memory media **660,** the pages in the memory range **662** may be invalidated (e.g., addresses may be indicated as free for future write operations). In some embodiments, if the region of memory (e.g., memory range **652**) that the command is performed on is on the storage media **650,** the memory device **220** may perform the command on the storage media **650** using the controller **640.** For example, the command may communicate to the storage media **650** to make the region of memory allocatable or initialize the region of memory to zero.

In some embodiments, a completion message may be communicated to the host device **210.** For example, in some embodiments, the CSR **610** (e.g., completion status **618** and/or completion interrupt **620**) may be modified and, e.g., the host device **210** may poll the CSR to determine the status of the operation or may handle the interrupt. In some embodiments, a message may be sent to the host device **210** indicating the completion status.

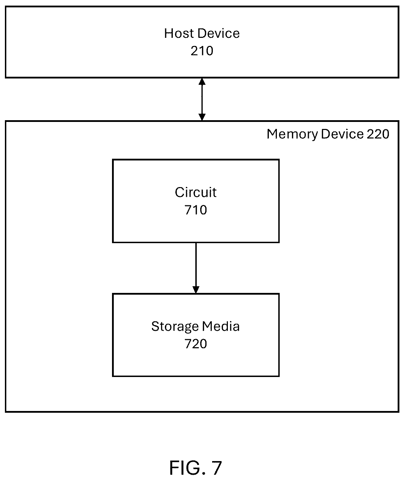

FIG. 7 illustrates a memory device in accordance with embodiments of the disclosure. The elements illustrated in FIG. 7 may be similar elements to those illustrated in FIG. 2a and 2b in which similar elements may be indicated by reference numbers ending in, and/or containing, the same digits, letters, and/or the like. In some embodiments, the memory device **220** may include one or more circuits **710,** and storage media **720.**

In some embodiments, when a request is received by the memory device **220,** the memory device **220** may determine an operation to be performed on the memory device **220.** For example, if the memory device **220** receives a request to make a region of memory allocatable, the one or more circuits **710** may receive the request, process the request, and send a command to the storage media **720** to make the region of memory allocatable. In some embodiments, the request may use a memory access protocol. For example, using the memory access protocol, a CSR on the memory device **220** may be updated with an address range and an indication of an operation to perform on the memory device **220.** In some embodiments, the one or more circuits **710** may determine where the region of memory to be made allocatable is located. For example, when the region of data is on the storage media **720,** the one or more circuits **710** may send a command to initialize at least a portion of the storage media **720** corresponding to the memory range and/or to make at least a portion of the storage media **720** corresponding to the memory range allocatable.

In some embodiments, the storage media **720** may receive the command and perform a corresponding operation on the storage media **720.** For example, in some embodiments, the storage media **720** may receive a command to make the region of memory allocatable. In some embodiments, based on the command, the storage media **720** may make the region of memory allocatable.

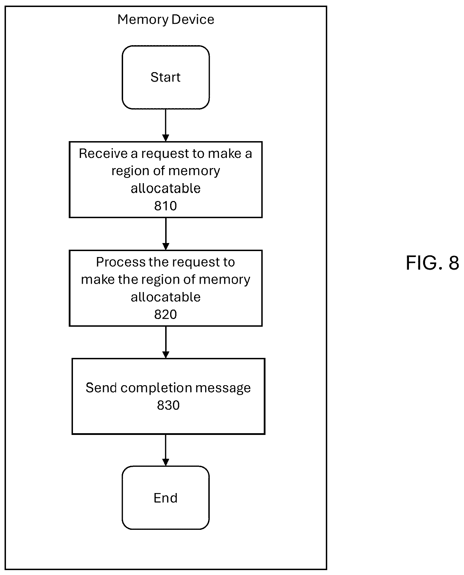

FIG. 8 illustrates a flowchart of a garbage collection process in accordance with embodiments of the disclosure. At **810,** a request may be received by a memory device to make a region of memory allocatable. For example, a host may update a CSR on the memory device, using a memory access protocol, indicating that a region of memory may be allocatable. In some embodiments, the CSR may be updated with an opcode to perform the operation corresponding to the opcode. For example, the memory device may receive a CSR with an opcode to persist a region of memory. In some embodiments, the CSR may contain an indication of the region of memory (e.g., a start address and an end address) for which the operation is performed.

At **820,** the request to make the region of memory allocatable may be processed. For example, the memory device may make a region of memory allocatable. In some embodiments, an FTL may be updated with free LBA regions of memory, indicating that they are available. In some embodiments, a region on a memory media corresponding to the LBAs may be made allocatable. For example, the region on the memory media may be deallocated. In some embodiments, the memory device may communicate to a backend SSD using a command to make memory allocatable or initialize the memory on the SSD. In some embodiments, the pages in the region of memory may be made allocatable.

At **830,** a completion message may be sent. For example, the memory device may receive a communication from a backend SSD that the region of memory is allocatable. In some embodiments, the memory device may communicate the completion to the host based on the communication from the backend SSD. In some embodiments, a completion communication may not come from a backend SSD and may be generated by the memory device. For example, in the case of an integrated tiered memory expander device, the memory device may make the region of memory allocatable and communicate the completion to the host.

In some embodiments, a host may send a command, e.g., a force garbage collection command, to the memory device. The host may not send a force garbage collection command, and the memory device may execute a garbage collection operation on its own. For example, the memory device may use artificial intelligence to determine when to execute a garbage collection operation based on the deallocated data on the memory device. In some embodiments, the memory device may forward the force garbage collection command to the storage media. This may allow the memory device to start garbage collection at a determined time. For example, the memory device may forward the force garbage collection command whenever it receives the garbage collection command from the host. In some embodiments, the memory device may determine whether to forward the force garbage collection command based on logic on the memory device.

In some embodiments, the memory device may zero out the pages (e.g., remove charges on the transistors) that are deallocated. In some embodiments, the memory device may alternatively initialize memory ranges indicated by the host without deallocation.

In some embodiments, making memory allocatable may be performed more frequently since the system does not have to wait for a write operation to make memory allocatable. In some embodiments, the OS, an application, and/or system software may make memory allocatable. In some embodiments, a virtual machine (VM) and/or container may release memory after use. In some embodiments, making memory allocatable may apply to both volatile and non-volatile memory address ranges.

In some embodiments, an OS and/or system software may initialize memory before allocating memory to a VM, container, and/or application. In some embodiments, initializing memory may consume CPU cycles, and may add additional CPU burden. In some embodiments, until data is removed from the memory device, it may remain (e.g., the data may need an explicit deletion). In some embodiments, this may add an additional burden to the memory device controller for, e.g., garbage collection, recycling, retention, and the like. Thus, by controlling operations to make memory allocatable, the burden to the memory device may be reduced.

This disclosure encompasses numerous aspects relating to devices with memory and storage configurations. The aspects disclosed herein may have independent utility and may be embodied individually, and not every embodiment may utilize every aspect. Moreover, the aspects may also be embodied in various combinations, some of which may amplify some benefits of the individual aspects in a synergistic manner.

For purposes of illustrating the inventive principles of the disclosure, some example embodiments may be described in the context of specific implementation details such as a processing system that may implement a NUMA architecture, memory devices, and/or pools that may be connected to a processing system using an interconnect interface and/or protocol Compute Express Link (CXL), and/or the like. However, the principles are not limited to these example details and may be implemented using any other type of system architecture, interfaces, protocols, and/or the like.

In some embodiments, the latency of a memory device may refer to the delay between a memory device and the processor in accessing memory. Furthermore, latency may include delays caused by hardware such as the read-write speeds to access a memory device, and/or the structure of an arrayed memory device producing individual delays in reaching the individual elements of the array. For example, a first memory device in the form of DRAM may have a faster read/write speed than a second memory device in the form of a NAND device. Furthermore, the latency of a memory device may change over time based on conditions such as the relative network load, as well as the performance of the memory device over time, and environmental factors such as changing temperature influencing delays on the signal path.

Although some example embodiments may be described in the context of specific implementation details such as a processing system that may implement a NUMA architecture, memory devices, and/or pools that may be connected to a processing system using an interconnect interface and/or protocol CXL, and/or the like, the principles are not limited to these example details and may be implemented using any other type of system architecture, interfaces, protocols, and/or the like. For example, in some embodiments, one or more memory devices may be connected using any type of interface and/or protocol including Peripheral Component Interconnect Express (PCIe), Nonvolatile Memory Express (NVMe), NVMe-over-fabric (NVMe oF), Advanced eXtensible Interface (AXI), Ultra Path Interconnect (UPI), Ethernet, Transmission Control Protocol/Internet Protocol (TCP/IP), remote direct memory access (RDMA), RDMA over Converged Ethernet (ROCE), FibreChannel, InfiniBand, Serial ATA (SATA), Small Computer Systems Interface (SCSI), Serial Attached SCSI (SAS), iWARP, and/or the like, or any combination thereof. In some embodiments, an interconnect interface may be implemented with one or more memory semantic and/or memory coherent interfaces and/or protocols including one or more CXL protocols such as CXL.mem, CXI,.io, and/or CXL.cache, Gen-Z, Coherent Accelerator Processor Interface (CAPI), Cache Coherent Interconnect for Accelerators (CCIX), and/or the like, or any combination thereof. Any of the memory devices may be implemented with one or more of any type of memory device interface including DDR, DDR2, DDR3, DDR4, DDR5, LPDDRX, Open Memory Interface (OMI), NVLink, High Bandwidth Memory (HBM), HBM2, HBM3, and/or the like.

In some embodiments, any of the memory devices, memory pools, hosts, and/or the like, or components thereof, may be implemented in any physical and/or electrical configuration and/or form factor such as a free-standing apparatus, an add-in card such as a PCIe adapter or expansion card, a plug-in device, for example, that may plug into a connector and/or slot of a server chassis (e.g., a connector on a backplane and/or a midplane of a server or other apparatus), and/or the like. In some embodiments, any of the memory devices, memory pools, hosts, and/or the like, or components thereof, may be implemented in a form factor for a storage device such as 3.5 inch, 2.5 inch, 1.8 inch, M.2, Enterprise and Data Center SSD Form Factor (EDSFF), NF1, and/or the like, using any connector configuration for the interconnect interface such as a SATA connector, SCSI connector, SAS connector, M.2 connector, U.2 connector, U.3 connector, and/or the like. Any of the devices disclosed herein may be implemented entirely or partially with, and/or used in connection with, a server chassis, server rack, dataroom, datacenter, edge datacenter, mobile edge datacenter, and/or any combinations thereof. In some embodiments, any of the memory devices, memory pools, hosts, and/or the like, or components thereof, may be implemented as a CXL Type-1 device, a CXL Type-2 device, a CXL Type-3 device, and/or the like.

In some embodiments, any of the functionality described herein, including, for example, any of the logic to implement tiering, device selection, and/or the like, may be implemented with hardware, software, or a combination thereof including combinational logic, sequential logic, one or more timers, counters, registers, and/or state machines, one or more complex programmable logic devices (CPLDs), FPGAs, ASICs, central processing units (CPUs) such as complex instruction set computer (CISC) processors such as x86 processors and/or reduced instruction set computer (RISC) processors such as ARM processors, graphics processing units (GPUs), neural processing units (NPUs), tensor processing units (TPUs) and/or the like, executing instructions stored in any type of memory, or any combination thereof. In some embodiments, one or more components may be implemented as a SOC.

In this disclosure, numerous specific details are set forth in order to provide a thorough understanding of the disclosure, but the disclosed aspects may be practiced without these specific details. In other instances, well-known methods, procedures, components, and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. The terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

When an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" may include any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

The term "module" may refer to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system-on-a-chip (SoC), an assembly, and so forth. Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, e.g., one or more modules of computer-program instructions, encoded on computer-storage medium for execution by, or to control the operation of data-processing apparatus. Alternatively or additionally, the program instructions can be encoded on an artificially generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

While certain exemplary embodiments have been described and shown in the accompanying drawings, it should be understood that such embodiments merely illustrative, and the scope of this disclosure is not limited to the embodiments described or illustrated herein. The invention may be modified in arrangement and detail without departing from the inventive concepts as defined by the scope of the following claims.

## Claims

1. A method comprising:
receiving (310, 810), at a memory interface (230) of a device (220) configured as memory, using a memory access protocol, a request to make a region of memory allocatable; and
processing (320, 820) the request to make the region of memory allocatable.

2. The method of claim 1, wherein processing (320, 820) the request comprises:
making allocatable at least a portion of storage media (246, 650, 720) of the device (220) corresponding to the region of memory, and/or
assigning a value to at least a portion of storage media (246, 650, 720) of the device (220) corresponding to the region of memory.

3. The method of claim 1 or 2, wherein the device (220) comprises at least one circuit (710), the at least one circuit (710) configured to track allocated addresses on the device (220), wherein the method further comprises:
modifying the at least one circuit (710) to make addresses allocatable corresponding to the region of memory, and/or
wherein the device (220) comprises at least one circuit (710), the at least one circuit (710) configured to perform one or more operations on the region of memory, and processing the request comprises:
sending, based on receiving the request, a command to the at least one circuit (710) to make the region of memory allocatable.

4. The method of any one of claims 1 to 3, further comprising:
modifying the device (220) to indicate that the region of memory is allocatable; and
adding the region of memory to a list of allocatable memory locations.

5. The method of any one of claims 1 to 4, wherein the request to make a region of memory allocatable comprises:
a memory range and an indication of an operation.

6. The method of claim 5, wherein the indication of an operation comprises at least one of:
a trim operation, an initialize operation, a de-allocate operation, an initialize operation, a flush operation, a persist operation, a prefetch operation, an evict operation, an encrypt operation, a compress operation, and a de-duplication operation, and/or
wherein the indication of an operation comprises a command to perform at least one of:
assigning a value to at least a portion of storage media (246, 650, 720) of the device (220) corresponding to the memory range and making at least a portion of the storage media (246, 650, 720) corresponding to the memory range allocatable.

7. The method of any one of claims 1 to 6, further comprising:
sending (830) a completion message comprising at least one of:
an indicator that a memory range is assigned and an indicator that the memory range is allocatable.

8. A device comprising:
at least one circuit (710);
memory media (244); and
storage media (246, 650, 720);
wherein the at least one circuit (710) is configured to perform one or more operations comprising:
receiving (310, 810), using a memory access protocol, a request to make a region of memory allocatable; and
making (320, 820) the region of memory allocatable.

9. The device of claim 8, wherein the at least one circuit (710) is configured to track addresses of allocated regions of memory on the device (220); and wherein the at least one circuit (710) is further configured to perform one or more operations comprising:
modifying the at least one circuit (710) to make available at least one address corresponding to the region of memory.

10. The device of claim 8 or 9, wherein the device (220) comprises a storage device (240), wherein the storage device (240) comprises the storage media (246, 650, 720), wherein the at least one circuit (710) is further configured to perform one or more operations comprising:
sending, to the storage media (246, 650, 720), a command to make the region of memory allocatable; wherein the storage media (246, 650, 720) is configured to make the region of memory allocatable based on the command.

11. The device of any one of claims 8 to 10, wherein the storage media (246, 650, 720) is further configured to perform one or more operations comprising:
receiving, from the at least one circuit (710), a command to make allocatable the region of memory on the storage media (246, 650, 720); and
making allocatable the region of memory on the storage media (246, 650, 720), and/or
wherein the memory media (244) is configured to perform one or more operations comprising:
making allocatable the region of memory on the memory media (244), and/or
wherein the at least one circuit (710) is further configured to perform one or more operations comprising:
sending an indication that the region of memory is allocatable on the device (220).

12. A system comprising:
a host device (210); and
the device (220) according to any one of claims 8 to 11, wherein:
the storage media (246, 650, 720) comprises persistent storage; and
the at least one circuit (710) is configured to perform one or more operations comprising:
receiving, from the host device (210), using a memory access protocol, a request to make a portion of the storage media (246, 650, 720) allocatable;
translating the portion of the storage media (246, 650, 720) to one or more addresses; and
modifying the at least one circuit (710) to make the one or more addresses available.

13. The system of claim 12, wherein the at least one circuit (710) comprises a flash translation layer, and wherein the at least one circuit (710) is further configured to perform one or more operations comprising:
modifying the flash translation layer to make available addresses corresponding to the one or more addresses.

14. The system of claim 12 or 13, wherein the at least one circuit (710) is further configured to perform one or more operations comprising:
sending a request to the storage media (246, 650, 720) to make allocatable one or more regions of the storage media (246, 650, 720) corresponding to the one or more addresses; wherein the storage media (720) is configured to perform one or more operations comprising:
making allocatable the one or more regions of the storage media (246, 650, 720).

15. The system of any one of claims 12 to 14,
wherein the at least one circuit (710) is further configured to perform one or more operations comprising:
making one or more regions of the memory media (244) allocatable corresponding to the one or more addresses.
